(19) Europäisches Patentamt
European Patent Office
Office européen des brevets

(11) **EP 4 421 898 A1**

(12) **EUROPEAN PATENT APPLICATION**

(43) Date of publication:
**28.08.2024 Bulletin 2024/35**

(21) Application number: **24159087.6**

(22) Date of filing: **22.02.2024**

(51) International Patent Classification (IPC):
**H01M 4/131** (2010.01)    **H01M 4/66** (2006.01)
**H01M 4/02** (2006.01)    **H01M 4/136** (2010.01)

(52) Cooperative Patent Classification (CPC):
**H01M 4/667; H01M 4/131;** H01M 4/136;
H01M 2004/028; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2023   CN 202310155299**

(71) Applicant: **Ningde Amperex Technology Ltd.
Ningde City, Fujian 352100 (CN)**

(72) Inventors:
• **WANG, Lijie
Ningde City, Fujian Province, People s Republic of
China, 352100 (CN)**
• **WANG, Taosheng
Ningde City, Fujian Province, People s Republic of
China, 352100 (CN)**

(74) Representative: **Icosa
83 avenue Denfert-Rochereau
75014 Paris (FR)**

(54) **POSITIVE ELECTRODE PLATE, SECONDARY BATTERY, AND ELECTRIC APPARATUS**

(57)     A positive electrode plate (20) includes a positive electrode current collector (21), a first coating (22), a conductive layer (23) and a positive electrode active substance layer (24). The first coating (22) is disposed on at least one surface of the positive electrode current collector (21), the conductive layer (23) is disposed on a surface of the first coating (22), and the positive electrode active substance layer (24) is disposed on a surface of the conductive layer (23); and the first coating (22) is controlled to include a first material, where the first material comprises one or more selected from the group consisting of a layer-structured metal oxide, a spinel-structured metal oxide, a phosphate metal oxide and a ceramic material, and a conductivity of the conductive layer (23) is 0.02 S/cm to 1 S/cm.

FIG. 3

**Description**

**BACKGROUND**

**1. Technical Field**

This application relates to the field of electrochemical technologies, and in particular, to a positive electrode plate, a secondary battery, and an electric apparatus.

**2. Description of the Related Art**

Due to advantages such as high energy density, low self-discharge, no memory effect, and long cycle life, secondary batteries, such as lithium-ion batteries, have been widely used in fields such as portable electronic devices, electric vehicles, unmanned aerial vehicles, and large-scale energy storage devices.

To meet the increasingly high requirements of people for the safety performance of lithium-ion batteries, a safety coating is applied onto the surface of the positive electrode current collector to improve the safety of secondary batteries. However, the safety coating increases the internal resistance of the positive electrode plate, which leads to excessively rapid temperature rise of the secondary batteries during charging, affecting the rate performance of the secondary batteries.

**SUMMARY**

This application is intended to provide a positive electrode plate, a secondary battery, and an electric apparatus, so as to improve rate performance of the secondary battery while enabling the secondary battery to have good safety performance.

It should be noted that in the content of this application, an example in which a lithium-ion battery is used as a secondary battery is used to illustrate this application. However, the secondary battery of this application is not limited to the lithium-ion battery. Specific technical solutions are as follows.

A first aspect of this application provides a positive electrode plate including a positive electrode current collector and a first coating disposed on at least one surface of the positive electrode current collector, where a surface of the first coating is provided with a conductive layer, and a surface of the conductive layer is provided with a positive electrode active substance layer, where the first coating includes a first material. The first material in this application may comprise one or more selected from the group consisting of a layer-structured metal oxide, a spinel-structured metal oxide, a phosphate metal oxide and a ceramic material, and a conductivity of the conductive layer in this application is 0.02 S/cm to 1 S/cm. In the positive electrode plate, the first coating is disposed on at least one surface of the positive electrode current collector, and then the surface of the first coating is provided with the conductive layer; and the first coating is controlled to include the first material, where the first material comprises one or more selected from the group consisting of the layer-structured metal oxide, the spinel-structured metal oxide, the phosphate metal oxide and the ceramic material, and the conductivity of the conductive layer is controlled within the foregoing range. Through synergy of the foregoing structural design and material selection, contact impedance at a junction between the first coating and the positive electrode active substance layer is reduced, and the problem of high internal resistance of the positive electrode plate of the secondary battery is alleviated, improving rate performance of the secondary battery while enabling the secondary battery to have good safety performance.

In some embodiments of this application, the conductive layer includes a conductive material, the conductive material comprising one or more selected from the group consisting of carbon nanotubes, conductive carbon black and graphene material. The foregoing materials being selected as the conductive material in the conductive layer can improve conductive performance of the conductive layer, which reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, the conductive material includes the conductive carbon black and the carbon nanotubes, where a mass ratio of the conductive carbon black to the carbon nanotubes is 0.5:1 to 1.5:1. The conductive carbon black and the carbon nanotubes being selected to realize compounding of a granular conductive material and a linear long-range conductive material can further reduce resistance of the conductive layer, and make the conductive layer better disperse the current, which further reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, a mass percentage of the conductive material in the conductive layer is 50% to 95%. In this application, the mass percentage of the conductive material in the conductive layer being controlled within the foregoing range is conducive to improving the conductive performance of the conductive layer, which reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, thickness of the conductive layer is 1 $\mu$m to 10 $\mu$m, thickness of the positive electrode current collector is 3 $\mu$m to 10 $\mu$m, and thickness of the first coating is 1 $\mu$m to 9 $\mu$m. Without being bound by any theory, the thickness of the conductive layer, the thickness of the positive electrode current collector, and the thickness of the first coating being controlled within the foregoing ranges is conducive to maintaining good structural stability of the structural layers of the positive electrode plate, ensuring energy density of the battery while reducing the risk of breakage of the electrode plate.

In some embodiments of this application, $D_v50$ of the first material is 0.5 $\mu$m to 2 $\mu$m. Without being bound by any theory, $D_v50$ of the first material being controlled within the foregoing range can reduce side reactions between the first material and electrolyte, and enable the first material to have sufficient active surface, thereby improving the cycling performance and energy density of the secondary battery. According to this application, $D_v50$ is a particle size where the cumulative distribution by volume reaches 50% as counted from the small particle size; and $D_v90$ described below is a particle size where the cumulative distribution by volume reaches 90% as counted from the small particle size.

In some embodiments of this application, the ceramic material comprises one or more selected from the group consisting of aluminum oxide, boehmite, magnesium oxide, zirconium oxide, silicon oxide and calcium oxide. The foregoing materials being selected as the ceramic material is conducive to improving insulation performance of the first coating, thereby improving the rate performance of the secondary battery while enabling the secondary battery to have good safety performance.

In some embodiments of this application, the first coating further includes a conductive agent and a binder, the conductive agent comprising one or more selected from the group consisting of carbon nanotubes, conductive carbon black and graphene material. The foregoing materials being selected as the conductive agent can improve conductive performance of the first coating, thereby helping improve the rate performance of the secondary battery. The binder being added to the first coating is conducive to improving adhesion strength between the first coating and the positive electrode current collector, thereby improving high-temperature storage performance of the secondary battery.

In some embodiments of this application, the first coating includes lithium iron phosphate, a conductive agent, and a binder, where based on a total mass of the first coating, a mass percentage of the lithium iron phosphate is 70% to 90%, a mass percentage of the binder is 5% to 20%, and a mass percentage of the conductive agent is 1% to 10%. Without being bound by any theory, the mass percentages of the lithium iron phosphate, the conductive agent, and the binder being controlled within the foregoing ranges is conducive to improving safety performance of the first coating and obtaining a positive electrode plate with good structural stability, thereby improving the cycling performance of the secondary battery.

In some embodiments of this application, the first coating includes a ceramic material, a conductive agent, and a binder, where based on a total mass of the first coating, a mass percentage of the ceramic material is 70% to 90%, a mass percentage of the binder is 5% to 20%, and a mass percentage of the conductive agent is 1% to 10%. Without being bound by any theory, the mass percentages of the ceramic material, the conductive agent, and the binder being controlled within the foregoing ranges is conducive to improving the safety performance of the first coating and obtaining a positive electrode plate with good structural stability, thereby improving the cycling performance of the secondary battery.

In some embodiments of this application, the positive electrode active substance layer includes a positive electrode active substance, where the positive electrode active substance is selected from lithium cobalt oxide, lithium iron phosphate, lithium manganese iron phosphate, lithium manganate, or lithium nickel cobalt manganate, and $D_v50$ of the positive electrode active substance is 10 $\mu$m to 20 $\mu$m. The foregoing materials being selected as the positive electrode active substance and $D_v50$ of the positive electrode active substance being controlled within the foregoing range are conducive to reducing side reactions between the positive electrode active substance and the electrolyte, and can enable the positive electrode active substance to have sufficient active surface, thereby improving the cycling performance and energy density of the secondary battery.

A second aspect of this application provides a secondary battery including the positive electrode plate according to any one of the foregoing embodiments. In the positive electrode plate provided in this application, a conductive layer with high conductive performance is used to connect the first coating and the positive electrode active substance layer, which significantly reduces contact impedance at a junction between the first coating and the positive electrode active substance layer, and alleviates the problem of high internal resistance of the positive electrode plate, reducing internal resistance of the secondary battery.

A third aspect of this application provides an electric apparatus including the secondary battery according to the foregoing embodiment. The secondary battery provided in this application has low internal resistance, such that the electric apparatus provided in this application has good cycling performance and rate performance.

In the positive electrode plate, the secondary battery, and the electric apparatus provided in this application, the first coating is disposed on at least one surface of the positive electrode current collector, the conductive layer is disposed on the surface of the first coating, and the positive electrode active substance layer is disposed on the surface of the conductive layer; and the first coating is controlled to include the first material, where the first material comprises one or more selected from the group consisting of layer-structured metal oxide, spinel-structured metal oxide, phosphate metal oxide and ceramic material, and the conductivity of the conductive layer is 0.02 S/cm to 1 S/cm. In this application, a conductive layer with high conductive performance is used to connect the first coating and the positive electrode active substance layer, which significantly reduces contact impedance at a junction between the first coating and the positive electrode active substance layer, and alleviates the problem of high internal resistance of the positive electrode plate of the secondary battery, improving rate performance of the secondary battery while enabling the secondary battery to have good safety performance. Certainly, when any one of the products or methods of this application is implemented, the advantages described above are not necessarily demonstrated all at the same time.

## BRIEF DESCRIPTION OF DRAWINGS

To describe the technical solutions in some embodiments of this application and in the prior art more clearly, the following briefly describes the accompanying drawings required for describing some embodiments and the prior art. Apparently, the accompanying drawings in the following descriptions show only some embodiments of this application, and persons of ordinary skill in the art may still derive other drawings from these accompanying drawings.

FIG. 1 is a schematic structural diagram of a secondary battery according to some embodiments of this application;

FIG. 2 is a schematic structural diagram of a cross section of a secondary battery according to some embodiments of this application along its thickness direction;

FIG. 3 is a schematic structural diagram of a cross section of a positive electrode plate according to some embodiments of this application along its thickness direction;

FIG. 4 is a schematic structural diagram of a cross section of a positive electrode current collector coated with a first coating according to some embodiments of this application along its thickness direction;

FIG. 5 is a schematic structural diagram of a cross section of a positive electrode current collector coated with a first coating and a conductive layer according to some embodiments of this application along its thickness direction;

FIG. 6 is a schematic structural diagram of a cross section of a positive electrode plate according to some other embodiments of this application along its thickness direction;

FIG. 7 is a schematic structural diagram of a cross section of a positive electrode plate in Comparative Example 1 of this application along its thickness direction;

FIG. 8 is a schematic structural diagram of a cross section of a positive electrode plate in Comparative Example 2 of this application along its thickness direction; and

FIG. 9 is a schematic structural diagram of a cross section of a positive electrode plate in Comparative Example 3 of this application along its thickness direction.

Reference signs: 10. secondary battery, 20. positive electrode plate, 21. positive electrode current collector, 22. first coating, 23. conductive layer, 24. positive electrode active substance layer, 25. inorganic coating, 26. tab, 30. negative electrode plate, 40. separator, 211. first uncoated region, and 212. second uncoated region.

## DETAILED DESCRIPTION

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on some embodiments of this application shall fall within the protection scope of this application.

It should be noted that in specific embodiments, an example in which a lithium-ion battery is used as a secondary battery is used to illustrate this application. However, the secondary battery of this application is not limited to the lithium-ion battery. Specific technical solutions are as follows:

The inventors have found that in the prior art, a safety coating (that is, the first coating according to this application) is applied onto a positive electrode current collector to improve safety in a nail penetration test or an impact test. However, resistance of the safety coating is higher than that of an active substance layer. Due to the presence of the safety coating, two interfaces, one between the safety coating and the positive electrode active substance layer and the other between the safety coating and the positive electrode current collector, are formed inside a positive electrode plate, resulting in increased internal resistance of the positive electrode plate, affecting rate performance of a secondary battery.

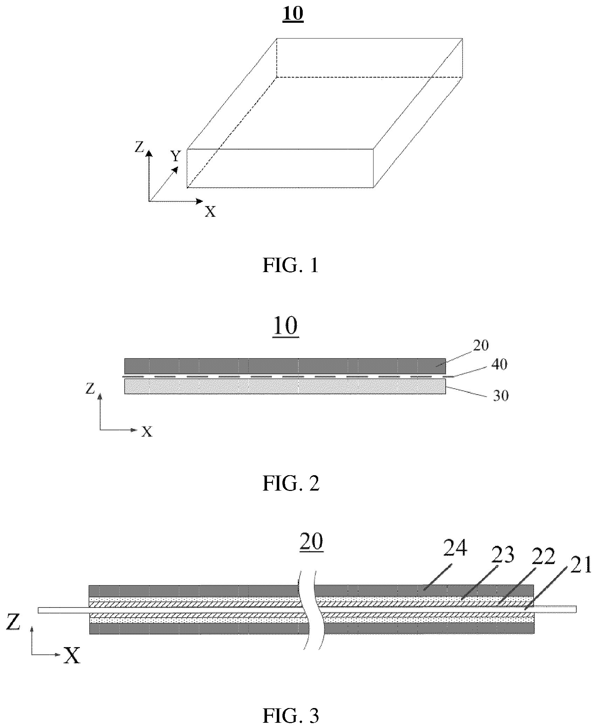

In view of this, a first aspect of this application provides a positive electrode plate 20. For ease of understanding, as shown in FIG. 1, a three-dimensional rectangular coordinate system is established with a width direction of a secondary battery 10 as a direction X, a length direction of the secondary battery 10 as a direction Y, and a thickness direction of the secondary battery 10 as a direction Z. As shown in FIG. 2, the secondary battery 10 includes a positive electrode plate 20, a negative electrode plate 30, and a separator 40 disposed between the positive electrode plate 20 and the negative electrode plate 30. As shown in FIG. 3, the positive electrode plate 20 includes a positive electrode current collector 21 and a first coating 22 disposed on at least one surface of the positive electrode current collector 21. The "surface" herein may be an entire region or a partial region of the positive electrode current collector. This is not particularly limited in this application, provided that the objectives of this application can be achieved. A surface of the first coating 22 is provided with a conductive layer 23, and a surface of the conductive layer 23 is provided with a positive electrode active substance layer 24, where the first coating 22 includes a first material. The first material in this application may be comprise one or more selected from the group consisting of a layer-structured metal oxide, a spinel-structured metal oxide, a phosphate metal oxide and a ceramic material, and a conductivity of the conductive layer 23 is 0.02 S/cm to 1 S/cm. In the positive electrode plate, the first coating is disposed on at least one surface of the positive electrode current collector, and then the surface of the first coating is provided with the conductive layer; and the first material of the first coating comprises one or more selected from the group consisting of the layer-structured metal oxide, the spinel-structured metal oxide, the phosphate metal oxide and the ceramic material, and the conductivity of the conductive layer is within the foregoing range. Through synergy of the foregoing structural design and material selection, contact impedance at a junction between the first coating and the positive electrode active substance layer is reduced, and the problem of high internal resistance of the positive electrode plate of the secondary battery is alleviated, which means that internal resistance of the secondary battery is reduced, improving rate performance of the secondary battery while enabling the secondary battery to have good safety performance.

In some embodiments of this application, the conductive layer includes a conductive material, the conductive material comprising one or more selected from the group consisting of carbon nanotubes, conductive carbon black and graphene material. The foregoing materials being selected as the conductive material in the conductive layer can improve conductive performance of the conductive layer, which reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, the conductive material includes the conductive carbon black and the carbon nanotubes, where a mass ratio of the conductive carbon black to the carbon nanotubes is 0.5:1 to 1.5:1. The conductive carbon black and the carbon nanotubes being selected to realize compounding of a granular conductive material and a linear long-range conductive material can further reduce resistance of the conductive layer, and make the conductive layer better disperse the current, which further reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, a mass percentage of the conductive material in the conductive layer is 50% to 95%. In this application, the mass percentage of the conductive material in the conductive layer being controlled within the foregoing range is conducive to improving the conductive performance of the conductive layer, which reduces the contact impedance at the junction between the first coating and the positive electrode active substance layer, and alleviates the problem of high internal resistance of the positive electrode plate of the secondary battery, improving the rate performance of the secondary battery while enabling the secondary battery to have good safety performance.

In some embodiments of this application, thickness of the conductive layer is 1 $\mu$m to 10 $\mu$m, thickness of the positive electrode current collector is 3 $\mu$m to 10 $\mu$m, and thickness of the first coating is 1 $\mu$m to 9 $\mu$m. Without being bound by any theory, the thickness of the conductive layer, the thickness of the positive electrode current collector, and the thickness of the first coating being controlled within the foregoing ranges is conducive to maintaining good structural stability of the structural layers of the positive electrode plate, ensuring energy density of the battery while reducing the risk of breakage of the positive electrode plate.

In some embodiments of this application, $D_v50$ of the first material is 0.5 $\mu$m to 2 $\mu$m. Without being bound by any theory, $D_v50$ of the first material being controlled within the foregoing range can reduce side reactions between the first material and electrolyte, and enable the first material to have sufficient active surface, thereby improving the cycling performance and energy density of the secondary battery. $D_v50$ is a particle size of a material where the cumulative distribution by volume reaches 50% as counted from the small particle size.

In some embodiments of this application, the ceramic material comprises one or more selected from the group consisting of aluminum oxide, boehmite, magnesium oxide, zirconium oxide, silicon oxide and calcium oxide. The foregoing materials being selected as the ceramic material is conducive to improving insulation performance of the first coating, thereby improving the rate performance of the secondary battery while enabling the secondary battery to have good safety performance.

In some embodiments of this application, the first coating further includes a conductive agent and a binder, the conductive agent comprising one or more selected from the group consisting of carbon nanotubes, conductive carbon black and graphene material. The foregoing materials being selected as the conductive agent can improve conductive performance of the first coating, thereby helping improve the rate performance of the secondary battery. The binder is not particularly limited in this application, provided that the invention objectives of this application can be achieved. For example, the binder comprises one or more selected from the group consisting of polyvinylidene fluoride, vinylidene fluoride-hexafluoropropylene copolymer, polyacrylonitrile, polyacrylate ester, polyacrylic acid, polyacrylate salt, polyvinylpyrrolidone, polyamide, polyvinyl ether, polymethyl methacrylate, polytetrafluoroethylene, polyhexafluoropropylene, polypropylene, polyethylene, polyetherimide and copolymer of propylene hydrocarbon derivative. The binder being added to the first coating is conducive to improving adhesion strength between the first coating and the positive electrode current collector, thereby improving high-temperature storage performance of the secondary battery.

In some embodiments of this application, the first coating includes lithium iron phosphate, a conductive agent, and a binder, where based on a total mass of the first coating, a mass percentage of the lithium iron phosphate is 70% to 90%, a mass percentage of the binder is 5% to 20%, and a mass percentage of the conductive agent is 1% to 10%. Without being bound by any theory, the mass percentages of the lithium iron phosphate, the conductive agent, and the binder being controlled within the foregoing ranges is conducive to improving mechanical safety performance and thermal safety of the first coating and obtaining a positive electrode plate with good structural stability, thereby improving the cycling performance of the secondary battery.

In some embodiments of this application, the first coating includes a ceramic material, a conductive agent, and a binder, where based on a total mass of the first coating, a mass percentage of the ceramic material is 70% to 90%, a mass percentage of the binder is 5% to 20%, and a mass percentage of the conductive agent is 1% to 10%. Without being bound by any theory, the mass percentages of the ceramic material, the conductive agent, and the binder being controlled within the foregoing ranges is conducive to improving the safety performance of the first coating and obtaining a positive electrode plate with good structural stability, thereby improving the cycling performance of the secondary battery.

In some embodiments of this application, the positive electrode active substance layer includes a positive electrode active substance, where the positive electrode active substance is selected from lithium cobalt oxide, lithium iron phosphate, lithium manganate, or nickel cobalt manganate ternary lithium material, and $D_v50$ of the positive electrode active substance is 10 $\mu$m to 20 $\mu$m. The foregoing materials being selected as the positive electrode active substance and $D_v50$ of the positive electrode active substance being controlled within the foregoing range are conducive to reducing side reactions between the positive electrode active substance and the electrolyte, and can enable the positive electrode active substance to have sufficient active surface, thereby improving the cycling performance and energy density of the secondary battery.

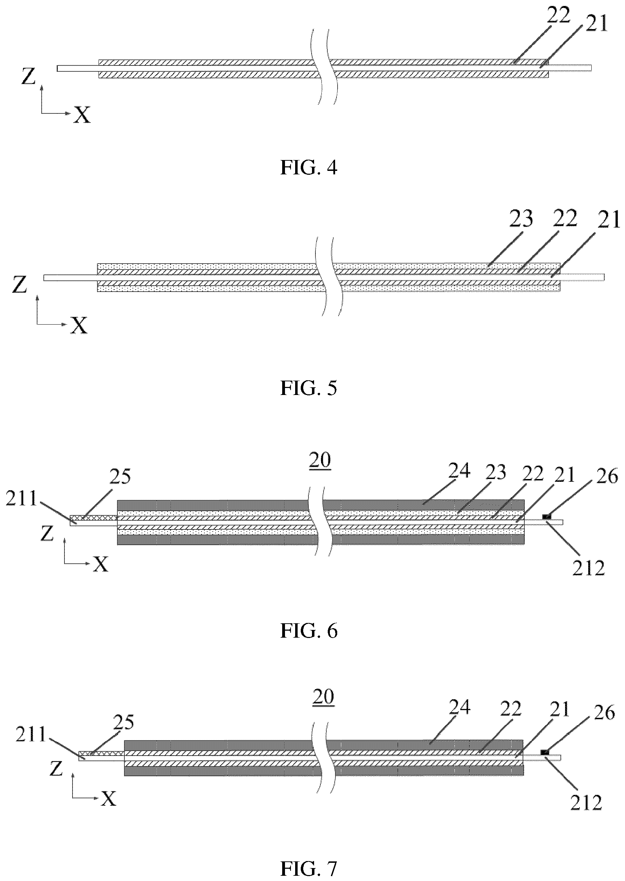

In some embodiments of this application, an uncoated region (that is, a region not coated with the active substance layer) of the positive electrode plate is further provided with an inorganic coating. As shown in FIG. 6, along the direction X, the positive electrode plate 20 includes a first uncoated region 211 and a second uncoated region 212, where the second uncoated region 212 is welded with a tab 26. The inorganic coating 25 is disposed on the first uncoated region 211, and the inorganic coating 25 is located on one surface of the positive electrode current collector 21. The foregoing structure can improve the safety performance of the secondary battery. Material and thickness of the inorganic coating are not particularly limited in this application. For example, the material of the inorganic coating comprises one or more of boehmite and $Al_2O_3$, and the thickness is 1 $\mu$m to 9 $\mu$m.

Types of the layer-structured metal oxide, the spinel-structured metal oxide, and the phosphate metal oxide are not particularly limited in this application, provided that the invention objectives of this application can be achieved. For example, the layer-structured metal oxide may be selected from any one of $LiCoO_2$, $LiNiO_2$, $LiNi_{0.5}Co_{0.2}Mn_{0.3}O_2$, $LiNi_{1/3}Co_{1/3}Mn_{1/3}O_2$, or $Li_2MnO_3$, the spinel-structured metal oxide may be selected from any one of $Li_2MnO_4$ or $LiCo_{0.5}Ni_{0.25}Mn_{1.25}O_4$, and the phosphate metal oxide may be selected from any one of $LiFePO_4$, $LiCoPO_4$, or $LiMnPO_4$.

Thickness of the positive electrode active substance layer, $D_v90$ of the first material, $D_v90$ of the positive electrode active substance, and length-diameter ratio of the carbon nanotubes are not particularly limited in this application, provided that the invention objectives of this application can be achieved. For example, the thickness of the positive electrode active substance layer is 100 $\mu$m to 800 $\mu$m, $D_v90$ of the first material is $\leq 3$ $\mu$m, $D_v90$ of the positive electrode active substance is $\leq 35$ $\mu$m, and the length-diameter ratio of the carbon nanotubes is 100 to 3000. $D_v90$ is a particle size of a material where the cumulative distribution by volume reaches 90% as counted from the small particle size.

The positive electrode current collector is not particularly limited in this application, provided that the objectives of this application can be achieved. For example, the positive electrode current collector may include aluminum foil, aluminum alloy foil, a composite current collector, or the like.

The method for controlling the conductivity of the conductive layer is not particularly limited in this application, provided that the objectives of this application can be achieved. For example, the conductivity of the conductive layer can be changed by selecting different conductive materials. Alternatively, for another example, the conductivity of the conductive layer generally increases with the increase of the percentage of the conductive material in the conductive layer, so the conductivity of the conductive layer can be controlled by controlling the percentage of the conductive material in the conductive layer.

The preparation method of positive electrode plate is not particularly limited in this application, and any preparation methods well known in the art can be used, provided that the objectives of this application can be achieved. For example, the preparation method of positive electrode plate includes but is not limited to the following steps: disperse a first material, a conductive agent, and a binder in an N-methylpyrrolidone (NMP) solvent, mix the mixture to form a uniform first coating slurry, and apply the first coating slurry onto a positive electrode current collector, followed by drying, as shown in FIG. 4; then disperse a conductive material and a binder in an N-methylpyrrolidone (NMP) solvent, mix the mixture to form a uniform conductive layer slurry, and apply the conductive layer slurry onto a surface of the first coating, followed by drying, as shown in FIG. 5; and then disperse a positive electrode active substance, a conductive agent, and a binder in an N-methylpyrrolidone (NMP) solvent, mix the mixture to form a uniform positive electrode active substance layer slurry, and apply the positive electrode active substance layer slurry onto a surface of the conductive layer, followed by drying, cold pressing, cutting, slitting, and re-drying, to obtain the positive electrode plate shown in FIG. 3.

In this application, a negative electrode plate includes a negative electrode current collector and a negative electrode active substance layer disposed on at least one surface of the negative electrode current collector. The "negative electrode active substance layer disposed on at least one surface of the negative electrode current collector" means that the negative electrode active substance layer may be disposed on one surface of the negative electrode current collector in its thickness direction, or on two surfaces of the negative electrode current collector in its thickness direction. The "surface" herein may be an entire region or a partial region of the negative electrode current collector. This is not particularly limited in this application, provided that the objectives of this application can be achieved. The negative electrode current collector is not particularly limited in this application, provided that the objectives of this application can be achieved. For example, the negative electrode current collector may include copper foil, copper alloy foil, nickel foil, titanium foil, nickel foam, copper foam, or the like. The negative electrode active substance layer includes a negative electrode active substance. Type of the negative electrode active substance is not particularly limited in this application, provided that the objectives of this application can be achieved. For example, the negative electrode active substance may comprise one or more selected from the group consisting of natural graphite, artificial graphite, soft carbon, hard carbon, meso-carbon microbeads, tin-based material, silicon-based material, lithium titanate, transition metal nitride and natural flake graphite. Optionally, the negative electrode active substance layer further comprises one or more selected from the group consisting of a conductive agent, a thickener and a binder. Types of the conductive agent, the thickener, and the binder in the negative electrode active substance layer are not particularly limited in this application, provided that the objectives of this application can be achieved. For example, the negative electrode binder may comprise but is not limited to one or more selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin and nylon. Mass ratio of the negative electrode active substance, the conductive agent, the thickener, and the binder in the negative electrode active substance layer is not particularly limited in this application, provided that the objectives of this application can be achieved. For example, the mass ratio of the negative electrode active substance, the conductive agent, the thickener, and the binder in the negative electrode active substance layer is (97-98):(0-1.5):(0.5-1.5):(1.0-1.9).

Optionally, the negative electrode plate may further include a conductive layer, the conductive layer being located between the negative electrode current collector and the negative electrode active substance layer. Composition of the conductive layer is not particularly limited in this application, and the conductive layer may be a conductive layer commonly used in the art. The conductive layer may include but is not limited to the foregoing negative electrode conductive agent and negative electrode binder.

A second aspect of this application provides a secondary battery including the positive electrode plate according to any one of the foregoing embodiments. In the positive electrode plate provided in this application, a conductive layer with high conductive performance is used to connect the first coating and the positive electrode active substance layer, which reduces contact impedance at a junction between the first coating and the positive electrode active substance layer, and alleviates the problem of high internal resistance of the positive electrode plate. The secondary battery of this application is not particularly limited, and may include an apparatus in which an electrochemical reaction takes place. For example, the secondary battery may include but is not limited to a lithium metal secondary battery, a lithium-ion secondary battery (lithium-ion battery), a lithium polymer secondary battery, and a lithium-ion polymer secondary battery.

The secondary battery of this application further includes a separator. The separator is not particularly limited in this application, and persons skilled in the art can make selection based on actual needs, provided that the objectives of this application can be achieved. For example, a material of the separator may comprise but is not limited to one or more selected from the group consisting of polyethylene (PE) and polypropylene (PP)-based polyolefin (PO), polyester (for example, polyethylene terephthalate (PET)), cellulose, polyimide (PI), polyamide (PA), spandex and aramid; and a type of the separator may comprise but is not limited to one or more selected from the group consisting of woven film, non-woven film (non-woven fabric), microporous film, composite film, separator paper, laminated film and spinning film. For example, the separator may include a substrate layer and a surface treatment layer. The substrate layer may be a non-woven fabric, film, or composite film having a porous structure, and a material of the substrate layer may comprise one or more selected from the group consisting of polyethylene, polypropylene, polyethylene glycol terephthalate and polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is provided on at least one surface of the substrate layer, and the surface treatment layer may be a polymer layer, an inorganic substance layer, or a layer formed by mixing a polymer and an inorganic substance. For example, the inorganic substance layer includes inorganic particles and a binder. The inorganic particle is not particularly limited, and for example, may comprise one or more selected from the group consisting of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide and barium sulfate. The binder is not particularly limited, and for example, may comprise one or more selected from the group consisting of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene and polyhexafluoropropylene. The polymer layer includes a polymer, and a material of the polymer comprises one or more selected from the group consisting of polyamide, polyacrylonitrile, acrylate polymer, polyacrylic acid, polyacrylate salt, polyvinylpyrrolidone, polyvinyl ether, polyvinylidene fluoride and poly (vinylidene fluoride-hexafluoropropylene).

The secondary battery of this application further includes an electrolyte. The electrolyte is not particularly limited in this application, and persons skilled in the art can make selection based on actual needs, provided that the objectives of this application can be achieved. For example, one or more selected from the group consisting of ethylene carbonate (EC for short), propylene carbonate (PC), diethyl carbonate (DEC), ethyl propionate (EP), propyl propionate (PP), ethyl methyl carbonate (EMC), dimethyl carbonate (DMC), vinylene carbonate (VC) and fluoroethylene carbonate (FEC) is mixed at a specific mass ratio to obtain a non-aqueous organic solvent, and then a lithium salt is added for dissolving and mixing to uniformity. The "mass ratio" is not particularly limited in this application, provided that the objectives of this application can be achieved. Type of the lithium salt is not limited in this application, provided that the objectives of this application can be achieved. For example, the lithium salt may comprise one or more selected from the group consisting of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, lithium bis(oxalato)borate (LiBOB) and lithium difluoroborate. Concentration of the lithium salt in the electrolyte is not particularly limited in this application, provided that the objectives of this application can be achieved. For example, the concentration of the lithium salt is 1.0 mol/L to 2.0 mol/L.

The secondary battery of this application further includes a housing. The housing is not particularly limited in this application, and persons skilled in the art can make selection based on actual needs, provided that the objectives of this application can be achieved. For example, the housing may be an aluminum-plastic film, an aluminum shell, or a stainless steel shell.

The preparation method of secondary battery is not particularly limited in this application, and any preparation methods well known in the art can be used, provided that the objectives of this application can be achieved. For example, the preparation method of secondary battery includes but is not limited to the following steps: stack a positive electrode plate, a separator, and a negative electrode plate in sequence and perform operations such as winding and folding as needed to obtain an electrode assembly with a winding structure, put the electrode assembly into a packaging bag, and inject electrolyte into the packaging bag and seal the packaging bag to obtain an electrochemical apparatus.

A third aspect of this application provides an electric apparatus including the secondary battery according to the foregoing embodiment. The electric apparatus is not particularly limited in this application, and may be a well-known electric apparatus used in the prior art. For example, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

**Examples**

The following describes some embodiments of this application more specifically by using examples and comparative examples. Various tests and evaluations are performed according to the following methods.

**Test methods and equipments**

**Conductivity test of conductive layer**

A film resistance tester was used to test film resistance, with test parameters being a pressure of 0.4 tons (T) and a holding time of 10s. Values showed by the film resistance tester were film resistances of a primer layer at different positions. The conductivity was calculated through R = $\rho$L/S.

**Particle size test of material**

Particle size distributions of the conductive material in the conductive layer, the first material in the first coating, and the positive electrode active substance in the positive electrode active substance layer were tested using a laser particle size analyzer (model Mastersizer 3000) to obtain their $D_v50$ and $D_v90$.

**Test of wet-state internal resistance and internal resistance after drying at 60°C for 20 min for positive electrode plate**

A film resistance tester (Initial Energy Science&Technology) was used to test internal resistance of wet-state samples of the positive electrode plate and internal resistance of the samples after drying at 60°C for 20 min. Before the test, alcohol was used to wipe the test probes of the film resistance tester, and then the pressure and resistance were reset to zero. The cut sample (60 mm × 80 mm) was placed flat on a sample carrier, and then the sample carrier was placed in a test chamber. 12 different positions of each positive electrode plate sample were taken for testing, and then the average value was calculated to obtain the wet-state internal resistance of the positive electrode plate and its internal resistance after drying at 60°C for 20 min, in mQ.

**Test of internal resistance and internal resistance after 60 days of storage for secondary battery**

A universal resistance tester (HT2572) was used to test the internal resistance of the secondary battery and its internal resistance after 60 days of storage under 1 kHz.

**Nail penetration pass rate test**

After the lithium-ion batteries in the examples and comparative examples were fully charged, the lithium-ion battery was placed on a flat iron plate as a test sample, and a nail with a diameter of 4 mm and a nail head angle of 30° penetrated perpendicular to the sample at a penetration speed of 30 mm/s.
Pass criterion: the lithium-ion battery that did not catch fire or explode passed the test.
100 lithium-ion batteries were tested for each example and comparative example.

$$\text{Nail penetration pass rate } (\%) = \text{pass number}/100 \times 100\%.$$

**Example 1**

"Preparation of positive electrode plate"

"Preparation of first coating"

Lithium iron phosphate (LFP), carbon nanotubes (with a length-diameter ratio of 1000), and PVDF were mixed at a mass ratio of 80:5:15, then N-methylpyrrolidone (NMP) was added as solvent to obtain a first coating slurry with a solid content of 30wt%, and the slurry was stirred to uniformity. As shown in FIG. 4, the first coating slurry was uniformly applied onto one surface of a 6 $\mu$m thick positive electrode current collector aluminum foil by using a gravure coating process, with two ends of the positive electrode current collector coated with no first coating slurry serving as uncoated regions, and then dried at 90°C to obtain a 5 $\mu$m thick first coating; and then the same steps were repeated on the other surface of the aluminum foil so that both surfaces were coated with a first coating. $D_v50$ of the first material lithium iron phosphate in the first coating was 1.2 μm.

"Preparation of conductive layer"

Conductive carbon black (SP), carbon nanotubes, and PVDF were mixed at a mass ratio of 30 : 30 : 40, then NMP was added as solvent to obtain a conductive layer slurry with a solid content of 30wt%, and the slurry was stirred to uniformity. As shown in FIG. 5, the conductive layer slurry was uniformly applied onto the surface of the first coating on one side by using a transfer coating process, and then dried at 90°C to obtain a 5 μm thick conductive layer; and then the same steps were repeated on the surface of the first coating on the other side so that both surfaces were coated with a conductive layer. Conductivity of the conductive layer was 0.6 S/cm.

"Preparation of positive electrode active substance layer"

Lithium cobalt oxide (LCO), PVDF, and conductive carbon black (SP) were mixed at a mass ratio of 97:1.5:1.5, then NMP was added as solvent to obtain a positive electrode active substance layer slurry with a solid content of 75wt%, and the slurry was stirred to uniformity. As shown in FIG. 3, the positive electrode active substance layer slurry was uniformly applied onto the surface of the conductive layer on one side by using an extrusion coating process, and then dried at 90°C to obtain a 120 μm thick positive electrode active substance layer, where $D_v50$ of a positive electrode active substance in the positive electrode active substance layer was 15 μm. Then, the same steps were repeated on the surface of the conductive layer on the other side so that both surfaces were coated with a positive electrode active substance layer.

"Preparation of inorganic coating"

Boehmite and PVDF were mixed at a mass ratio of 30:70, then NMP was added as solvent, and the mixture was stirred to uniformity by using a vacuum stirrer, to obtain an inorganic coating slurry with a solid content of 30wt%; and then the inorganic coating slurry was applied onto the first uncoated region of the positive electrode plate, and dried at 90°C to form an inorganic coating, where thickness of the inorganic coating was the same as the thickness of the first coating. Then, processes such as cold pressing, slitting, cutting, and tab welding were performed to obtain a positive electrode plate. The structure of the positive electrode plate is shown in FIG. 6.

"Preparation of negative electrode plate"

Artificial graphite, conductive carbon black (SP), styrene-butadiene rubber (SBR), and sodium carboxymethyl cellulose (CMC) were mixed at a mass ratio of 97:1:1:1, then deionized water was added to obtain a slurry with a solid content of 75wt%, and the slurry was stirred to uniformity. The slurry was uniformly applied onto one surface of a 6 μm thick negative electrode current collector copper foil, and then dried at 85°C to obtain a negative electrode plate with a 120 μm thick negative electrode active substance layer; then the same steps were repeated on the other surface of the negative electrode plate to obtain a negative electrode plate coated with negative electrode active substances on two surfaces; and then the obtained negative electrode plate was subjected to cold pressing, slitting, cutting, and tab welding to obtain a negative electrode plate.

"Preparation of electrolyte"

EC, DEC, PC, PP, and VC were mixed at a mass ratio of 20:30:20:28:2 to obtain a non-aqueous organic solvent. Then, lithium salt $LiPF_6$ and the non-aqueous organic solvent were mixed at a mass ratio of 8:92 to obtain an electrolyte.

"Preparation of separator"

A porous polyethylene film with a thickness of 7 μm was used.

"Preparation of lithium-ion battery"

The prepared positive electrode plate, separator, and negative electrode plate were stacked in sequence, so that the separator was sandwiched between the positive electrode plate and the negative electrode plate for separation. Then, the resulting stack was wound to obtain an electrode assembly. The electrode assembly was placed into an aluminum-plastic film packaging bag and dried, and then the electrolyte was injected, followed by processes such as vacuum sealing, standing, formation, degassing, and trimming, to obtain a lithium-ion battery.

**Example 2 to Example 5**

Example 2 to Example 5 were the same as Example 1 except that in "Preparation of positive electrode plate", the conductivity of the conductive layer was adjusted according to Table 1 by adjusting the percentage of the conductive materials in the conductive layer.

**Example 6 and Example 7**

Example 6 and Example 7 were the same as Example 1 except that in "Preparation of positive electrode plate", the thickness of the conductive layer was adjusted according to Table 1.

**Example 8 and Example 9**

Example 8 and Example 9 were the same as Example 1 except that in "Preparation of positive electrode plate", the conductivity of the conductive layer was adjusted according to Table 1 by adjusting the mass ratio of the conductive carbon black to the carbon nanotubes in the conductive layer according to Table 1.

**Example 10 to Example 13**

Example 10 to Example 13 were the same as Example 1 except that in "Preparation of positive electrode plate", the type of the first material in the first coating and the mass percentages of the components were adjusted according to Table 1.

**Example 14 and Example 15**

Example 14 and Example 15 were the same as Example 1 except that in "Preparation of positive electrode plate", the thickness of the first coating and $D_v50$ of the first material in the first coating were adjusted according to Table 1.

**Example 16 to Example 20**

Example 16 to Example 20 were the same as Example 1 except that in "Preparation of positive electrode plate", the type and $D_v50$ of the positive electrode active substance in the positive electrode active substance layer were adjusted according to Table 1.

**Example 21 and Example 22**

Example 21 and Example 22 were the same as Example 1 except that in "Preparation of positive electrode plate", the thickness of the positive electrode current collector was adjusted according to Table 1.

**Example 23 to Example 25**

Example 23 to Example 25 were the same as Example 1 except that in "Preparation of positive electrode plate", the type of the conductive material was adjusted according to Table 1.

**Comparative Example 1**

Comparative Example 1 was the same as Example 1 except that in "Preparation of positive electrode plate", the conductive layer was not applied, to form the structure shown in FIG. 7.

**Comparative Example 2**

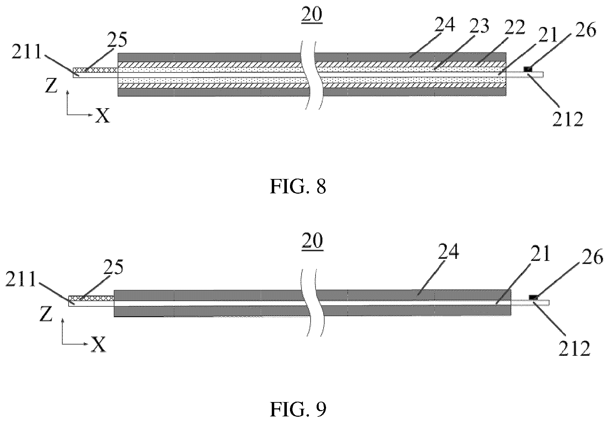

Comparative Example 2 was the same as Example 1 except that in "Preparation of positive electrode plate", the conductive layer was applied onto the surface of the positive electrode current collector first, and then the first coating was applied onto the surface of the conductive layer, to form the structure shown in FIG. 8.

**Comparative Example 3**

Comparative Example 3 was the same as Example 1 except that in "Preparation of positive electrode plate", the first coating and the conductive layer were not applied, to form the structure shown in FIG. 9.

**Comparative Example 4 and Comparative Example 5**

Comparative Example 4 and Comparative Example 5 were the same as Example 1 except that in "Preparation of positive electrode plate", the conductivity of the conductive layer was adjusted according to Table 1 by adjusting the percentage of the conductive materials in the conductive layer.

**Table 1**

| | Conductive layer | | | | First coating | | | Positive electrode active substance | | Positive electrode current collector |
|---|---|---|---|---|---|---|---|---|---|---|
| | Conductivity (S/cm) | Thickness ($\mu$m) | Type and mass ratio of conductive materials | Total percentage of conductive materials | Thickness ($\mu$m) | $D_v50$ of first material ($\mu$m) | Mass ratio of components | Type | $D_v50$ ($\mu$m) | Thickness ($\mu$m) |
| Example 1 | 0.60 | 5 | Carbon black: carbon nanotubes = 1:1 | 60% | 5 | 1.2 | Lithium iron phosphate : carbon nanotubes : PVDF = 80:5:15 | Lithium cobalt oxide | 15 | 6 |
| Example 2 | 0.02 | 5 | Carbon black: carbon nanotubes = 1:1 | 50% | 5 | 1.2 | Lithium iron phosphate : carbon nanotubes : PVDF = 80:5:15 | Lithium cobalt oxide | 15 | 6 |
| Example 3 | 0.21 | 5 | Carbon black: carbon nanotubes = 1:1 | 55% | 5 | 1.2 | Lithium iron phosphate : carbon nanotubes : PVDF = 80:5:15 | Lithium cobalt oxide | 15 | 6 |
| Example 4 | 0.82 | 5 | Carbon black: carbon nanotubes = 1:1 | 80% | 5 | 1.2 | Lithium iron phosphate : carbon nanotubes : PVDF = 80:5:15 | Lithium cobalt oxide | 15 | 6 |
| Example 5 | 1 | 5 | Carbon black: carbon nanotubes = 1:1 | 95% | 5 | 1.2 | Lithium iron phosphate : carbon nanotubes : PVDF = 80:5:15 | Lithium cobalt oxide | 15 | 6 |
| Example 6 | 0.60 | 1 | Carbon black: carbon nanotubes = 1:1 | 60% | 5 | 1.2 | Lithium iron phosphate : carbon nanotubes : PVDF = 80:5:15 | Lithium cobalt oxide | 15 | 6 |

(continued)

| | Positive electrode current collector | Positive electrode active substance | | First coating | | | Conductive layer | | | |
|---|---|---|---|---|---|---|---|---|---|---|
| | Thickness (μm) | D_v50 (μm) | Type | Mass ratio of components | D_v50 of first material (μm) | Thickness (μm) | Total percentage of conductive materials | Type and mass ratio of conductive materials | Thickness (μm) | Conductivity (S/cm) |
| Example 7 | 6 | 15 | Lithium cobalt oxide | Lithium iron phosphate : carbon nanotubes : PVDF = 80:5:15 | 1.2 | 5 | 60% | Carbon black: carbon nanotubes = 1:1 | 10 | 0.60 |
| Example 8 | 6 | 15 | Lithium cobalt oxide | Lithium iron phosphate : carbon nanotubes : PVDF = 80:5:15 | 1.2 | 5 | 60% | Carbon black: carbon nanotubes = 0.5:1 | 5 | 0.63 |
| Example 9 | 6 | 15 | Lithium cobalt oxide | Lithium iron phosphate : carbon nanotubes : PVDF = 80:5:15 | 1.2 | 5 | 60% | Carbon black: carbon nanotubes = 1.5:1 | 5 | 0.55 |
| Example 10 | 6 | 15 | Lithium cobalt oxide | Aluminum oxide: carbon nanotubes: PVDF = 80:5:15 | 1.2 | 5 | 60% | Carbon black: carbon nanotubes = 1:1 | 5 | 0.60 |
| Example 11 | 6 | 15 | Lithium cobalt oxide | Boehmite:carbon nanotubes: PVDF = 80:5:15 | 1.2 | 5 | 60% | Carbon black: carbon nanotubes = 1:1 | 5 | 0.60 |
| Example 12 | 6 | 15 | Lithium cobalt oxide | Lithium iron phosphate : carbon nanotubes : PVDF = 70:10:20 | 1.2 | 5 | 60% | Carbon black: carbon nanotubes = 1:1 | 5 | 0.60 |

| | Conductive layer | | | | First coating | | | Positive electrode active substance | | Positive electrode current collector |
|---|---|---|---|---|---|---|---|---|---|---|
| | Conductivity (S/cm) | Thickness ($\mu$m) | Type and mass ratio of conductive materials | Total percentage of conductive materials | Thickness ($\mu$m) | $D_v$50 of first material ($\mu$m) | Mass ratio of components | Type | $D_v$50 ($\mu$m) | Thickness ($\mu$m) |
| Example 13 | 0.60 | 5 | Carbon black: carbon nanotubes = 1:1 | 60% | 5 | 1.2 | Lithium iron phosphate : carbon nanotubes : PVDF = 90:1:9 | Lithium cobalt oxide | 15 | 6 |
| Example 14 | 0.60 | 5 | Carbon black: carbon nanotubes = 1:1 | 60% | 1 | 0.5 | Lithium iron phosphate : carbon nanotubes : PVDF = 80:5:15 | Lithium cobalt oxide | 15 | 6 |
| Example 15 | 0.60 | 5 | Carbon black: carbon nanotubes = 1:1 | 60% | 9 | 2 | Lithium iron phosphate : carbon nanotubes : PVDF = 80:5:15 | Lithium cobalt oxide | 15 | 6 |
| Example 16 | 0.60 | 5 | Carbon black: carbon nanotubes = 1:1 | 60% | 5 | 1.2 | Lithium iron phosphate : carbon nanotubes : PVDF = 80:5:15 | Lithium cobalt oxide | 10 | 6 |
| Example 17 | 0.60 | 5 | Carbon black: carbon nanotubes = 1:1 | 60% | 5 | 1.2 | Lithium iron phosphate : carbon nanotubes : PVDF = 80:5:15 | Lithium cobalt oxide | 20 | 6 |
| Example 18 | 0.60 | 5 | Carbon black: carbon nanotubes = 1:1 | 60% | 5 | 1.2 | Lithium iron phosphate : carbon nanotubes : PVDF = 80:5:15 | Lithium manganate | 15 | 6 |

EP 4 421 898 A1

| | Conductive layer | | | | First coating | | | Positive electrode active substance | | Positive electrode current collector |
|---|---|---|---|---|---|---|---|---|---|---|
| | Conductivity (S/cm) | Thickness (μm) | Type and mass ratio of conductive materials | Total percentage of conductive materials | Thickness (μm) | $D_v50$ of first material (μm) | Mass ratio of components | Type | $D_v50$ (μm) | Thickness (μm) |
| Example 19 | 0.60 | 5 | Carbon black: carbon nanotubes = 1:1 | 60% | 5 | 1.2 | Lithium iron phosphate : carbon nanotubes : PVDF = 80:5:15 | Lithium nickel cobalt manganate | 15 | 6 |
| Example 20 | 0.60 | 5 | Carbon black: carbon nanotubes = 1:1 | 60% | 5 | 1.2 | Lithium iron phosphate : carbon nanotubes : PVDF = 80:5:15 | Lithium iron phosphate | 15 | 6 |
| Example 21 | 0.60 | 5 | Carbon black: carbon nanotubes = 1:1 | 60% | 5 | 1.2 | Lithium iron phosphate : carbon nanotubes : PVDF = 80:5:15 | Lithium cobalt oxide | 15 | 3 |
| Example 22 | 0.60 | 5 | Carbon black: carbon nanotubes = 1:1 | 60% | 5 | 1.2 | Lithium iron phosphate : carbon nanotubes : PVDF = 80:5:15 | Lithium cobalt oxide | 15 | 10 |
| Example 23 | 0.72 | 5 | Carbon nanotubes | 60% | 5 | 1.2 | Lithium iron phosphate : carbon nanotubes : PVDF = 80:5:15 | Lithium cobalt oxide | 15 | 6 |
| Example 24 | 0.53 | 5 | Carbon black | 60% | 5 | 1.2 | Lithium iron phosphate : carbon nanotubes : PVDF = 80:5:15 | Lithium cobalt oxide | 15 | 6 |

EP 4 421 898 A1

(continued)

| | Conductive layer | | | | | First coating | | | Positive electrode active substance | | Positive electrode current collector |
|---|---|---|---|---|---|---|---|---|---|---|---|
| | Conductivity (S/cm) | Thickness (μm) | Type and mass ratio of conductive materials | Total percentage of conductive materials | Thickness (μm) | Thickness (μm) | $D_v50$ of first material (μm) | Mass ratio of components | Type | $D_v50$ (μm) | Thickness (μm) |
| Example 25 | 0.75 | 5 | Graphene | 60% | 5 | 5 | 1.2 | Lithium iron phosphate : carbon nanotubes : PVDF = 80:5:15 | Lithium cobalt oxide | 15 | 6 |
| Comparative Example 1 | / | / | / | / | / | 5 | 1.2 | Lithium iron phosphate : carbon nanotubes : PVDF = 80:5:15 | Lithium cobalt oxide | 15 | 6 |
| Comparative Example 2 | 0.6 | 5 | Carbon black: carbon nanotubes = 1:1 | 60% | 5 | 5 | 1.2 | Lithium iron phosphate : carbon nanotubes : PVDF = 80:5:15 | Lithium cobalt oxide | 15 | 6 |
| Comparative Example 3 | / | / | / | / | / | / | / | / | Lithium cobalt oxide | 15 | 6 |
| Comparative Example 4 | 0.01 | 5 | Carbon black: carbon nanotubes = 1:1 | 5% | 5 | 5 | 1.2 | Lithium iron phosphate : carbon nanotubes : PVDF = 80:5:15 | Lithium cobalt oxide | 15 | 6 |
| Comparative Example 5 | 2 | 5 | Carbon black: carbon nanotubes = 1:1 | 99% | 5 | 5 | 1.2 | Lithium iron phosphate : carbon nanotubes : PVDF = 80:5:15 | Lithium cobalt oxide | 15 | 6 |

Note: "/" in Table 1 means that a related preparation parameter does not exist.

**Table 2**

| | Wet-state internal resistance of positive electrode plate (mΩ) | Internal resistance of positive electrode plate after drying at 60°C for 20 min (mΩ) | Internal resistance of secondary battery (mΩ) | Internal resistance of secondary battery after 60 days of storage (mΩ) | Nail penetration pass rate of secondary battery (%) |
|---|---|---|---|---|---|
| Example 1 | 4.6 | 54.9 | 30 | 36 | 100 |
| Example 2 | 5.5 | 59.2 | 34 | 41 | 100 |
| Example 3 | 5.1 | 55.6 | 32 | 40 | 100 |
| Example 4 | 3.2 | 45.2 | 28 | 34 | 100 |
| Example 5 | 2.5 | 30.5 | 26 | 34 | 100 |
| Example 6 | 4.2 | 53.4 | 29 | 35 | 100 |
| Example 7 | 5.3 | 56.5 | 34 | 39 | 100 |
| Example 8 | 4.4 | 52.7 | 28 | 35 | 100 |
| Example 9 | 4.8 | 55.2 | 33 | 39 | 100 |
| Example 10 | 3.3 | 40.3 | 28 | 35 | 100 |
| Example 11 | 3.6 | 41.3 | 27 | 36 | 100 |
| Example 12 | 4.4 | 50.6 | 27 | 36 | 100 |
| Example 13 | 5.2 | 59.7 | 33 | 37 | 100 |
| Example 14 | 5.0 | 55.1 | 31 | 37 | 100 |
| Example 15 | 4.7 | 55.6 | 30 | 36 | 100 |
| Example 16 | 4.5 | 53.4 | 30 | 36 | 100 |
| Example 17 | 4.7 | 54.5 | 30 | 37 | 100 |
| Example 18 | 5.2 | 68.4 | 36 | 48 | 100 |
| Example 19 | 5.4 | 66.5 | 34 | 43 | 100 |
| Example 20 | 6.8 | 70.3 | 40 | 55 | 100 |
| Example 21 | 5.0 | 58.4 | 34 | 40 | 100 |
| Example 22 | 3.4 | 48.6 | 26 | 35 | 100 |
| Example 23 | 4.2 | 50.1 | 31 | 39 | 100 |
| Example 24 | 4.4 | 51.3 | 32 | 39 | 100 |
| Example 25 | 4.1 | 48.8 | 26 | 37 | 100 |
| Comparative Example 1 | 7.2 | 79.6 | 44 | 66 | 100 |
| Comparative Example 2 | 2 | 5.1 | 27 | 30 | 0 |
| Comparative Example 3 | 3.4 | 44.5 | 30 | 40 | 0 |
| Comparative Example 4 | 6.9 | 72.9 | 41 | 61 | 100 |
| Comparative Example 5 | 4.3 | 50.3 | 29 | 35 | 100 |

Referring to Table 1 and Table 2, it can be learned from Example 1 to Example 25 and Comparative Example 1 to Comparative Example 5 that because the positive electrode plate in Comparative Example 1 does not have the conductive layer, although it has a high nail penetration pass rate, the interfacial contact resistance between the positive electrode active substance layer and the first coating is higher than the interfacial contact resistance between the conductive layer and the positive electrode active substance layer and the interfacial contact resistance between the conductive layer and the first coating, which causes that the internal resistance of the battery after drying at 60°C for 20 min, the internal resistance of the lithium-ion battery, and the internal resistance of the lithium-ion battery after 60 days of storage in Comparative Example 1 are significantly higher than those in Example 1, whereas high internal resistance affects the rate performance of the lithium-ion battery.

In the positive electrode plate in Comparative Example 2, the conductive layer is applied onto the surface of the positive electrode current collector first, and then the first coating is applied onto the surface of the conductive layer. Therefore, the conductive layer is disposed between the first coating and the positive electrode current collector, which significantly reduces the interfacial contact impedance between the first coating and the positive electrode current collector, so that the internal resistance of the positive electrode plate after drying at 60°C for 20 min, the internal resistance of the lithium-ion battery, and the internal resistance of the lithium-ion battery after 60 days of storage in Comparative Example 2 are low. However, the nail penetration pass rate of the lithium-ion battery in Comparative Example 2 is only 0%. This is because in the solution of Comparative Example 2, the conductive layer is disposed between the first coating and the positive electrode current collector, while the interface stability between the conductive layer and the positive electrode current collector is poor and the conductive layer is in direct contact with the positive electrode current collector, resulting in excessively low internal resistance of the positive electrode plate. When the lithium-ion battery is fully charged, according to $P = U^2/R$, the short-circuit power is increased, and thus the risk of short circuit of the lithium-ion battery is also increased, reducing the safety performance of the lithium-ion battery.

Because Comparative Example 3 does not have the first coating and the conductive layer, although the internal resistance of the lithium-ion battery and the internal resistance of the lithium-ion battery after 60 days of storage in Comparative Example 3 are low, the risk of short circuit of the lithium-ion battery is increased due to the absence of the first coating in the positive electrode plate, and the nail penetration pass rate of the lithium-ion battery is 0%, resulting in poor safety performance of the lithium-ion battery.

When the percentage of the conductive material in the conductive layer is excessively low, the conductivity of the conductive layer is excessively low (for example, Comparative Example 4), and the internal resistance of the positive electrode plate after drying at 60°C for 20 min, the internal resistance of the lithium-ion battery, and the internal resistance of the lithium-ion battery after 60 days of storage are all high, and the high internal resistance affects the rate performance of the lithium-ion battery. When the percentage of the conductive material in the conductive layer is excessively high (for example, Comparative Example 5), the internal resistance of the positive electrode plate after drying at 60°C for 20 min, the internal resistance of the lithium-ion battery, and the internal resistance of the lithium-ion battery after 60 days of storage are comparatively low, which is conducive to the rate performance and suppression of temperature rise of the battery. However, due to the decreased amount of binder, the adhesion force is insufficient, which causes the positive electrode active substance layer to be prone to peel off during cycling, deteriorating the cycling stability of the battery, not conducive to improving the long-term cycling performance of the battery. In this application, by controlling the conductivity of the conductive layer within the range of this application and through synergy of the structural design and the material selection, the contact impedance at the junction between the first coating and the positive electrode active substance layer is reduced, and the problem of high internal resistance of the positive electrode plate of the lithium-ion battery is alleviated, improving the rate performance of the lithium-ion battery while enabling the lithium-ion battery to have good safety performance.

The thickness of the conductive layer, the type and ratio of the conductive materials of the conductive layer, the thickness of the first coating, the particle size of the first material of the first coating, the ratio of the components of the first coating, the type and particle size of the positive electrode active substance, and the thickness of the positive electrode current collector generally also affect the performance of the lithium-ion battery. It can be learned from Example 6 to Example 25 that lithium-ion batteries with good safety performance and rate performance can also be obtained by controlling the foregoing parameters within the ranges of this application.

It should be noted that in the specification, the relational terms such as "first" and "second" are only used to distinguish one entity or operation from another entity or operation, and do not necessarily require or imply that there is any such actual relationship or order between these entities or operations. In addition, the terms "include", "comprise", or any of their variants are intended to cover a non-exclusive inclusion, such that a process, method, article, or device that includes a series of elements includes not only those elements but also other elements that are not expressly listed, or further includes elements inherent to such process, method, article, or device. Without more restrictions, an element preceded by the statement "includes a..." does not preclude the presence of other identical elements in the process, method, article, or device that includes the element.

The foregoing descriptions are merely preferred embodiments of this application, and are not intended to limit the protection scope of this application. Any modifications, equivalent replacements, improvements, and the like made without departing from the spirit and principle of this application shall fall within the protection scope of this application.

**Claims**

1. A positive electrode plate (20), comprising a positive electrode current collector (21) and a first coating (22) disposed on at least one surface of the positive electrode current collector (21); a surface of the first coating (22) is provided with a conductive layer (23); and a surface of the conductive layer (23) is provided with a positive electrode active substance layer (24); **characterized in that**,

    the first coating (22) comprises a first material;
    the first material comprising one or more selected from the group consisting of a layer-structured metal oxide, a spinel-structured metal oxide, a phosphate metal oxide and a ceramic material; and
    a conductivity of the conductive layer (23) is 0.02 S/cm to 1 S/cm.

2. The positive electrode plate (20) according to claim 1, **characterized in that**,

    the conductive layer (23) comprises a conductive material;
    the conductive material comprising one or more selected from the group consisting of carbon nanotubes, conductive carbon black and graphene material.

3. The positive electrode plate (20) according to claim 2, **characterized in that**,

    the conductive material comprises the conductive carbon black and the carbon nanotubes; and
    a mass ratio of the conductive carbon black to the carbon nanotubes is 0.5:1 to 1.5:1.

4. The positive electrode plate (20) according to claim 2 or 3, **characterized in that**, a mass percentage of the conductive material in the conductive layer is 50% to 95%.

5. The positive electrode plate (20) according to any one of claims 1 to 4, **characterized in that**,

    a thickness of the conductive layer (23) is 1 $\mu$m to 10 $\mu$m;
    a thickness of the positive electrode current collector (21) is 3 $\mu$m to 10 $\mu$m; and
    a thickness of the first coating (22) is 1 $\mu$m to 9 $\mu$m.

6. The positive electrode plate (20) according to any one of claims 1 to 5, **characterized in that**, $D_v50$ of the first material is 0.5 $\mu$m to 2 $\mu$m.

7. The positive electrode plate (20) according to any one of claims 1 to 6, **characterized in that**, the ceramic material comprises one or more selected from the group consisting of aluminum oxide, boehmite, magnesium oxide, zirconium oxide, silicon oxide and calcium oxide.

8. The positive electrode plate (20) according to any one of claims 1 to 7, **characterized in that**,

    the first coating (22) further comprises a conductive agent and a binder;
    the conductive agent comprising one or more selected from the group consisting of carbon nanotubes, conductive carbon black and graphene material.

9. The positive electrode plate (20) according to any one of claims 1 to 7, **characterized in that**,

    the first coating (22) comprises lithium iron phosphate, a conductive agent, and a binder; wherein based on a total mass of the first coating (22),
    a mass percentage of the lithium iron phosphate is 70% to 90%;
    a mass percentage of the binder is 5% to 20%; and
    a mass percentage of the conductive agent is 1% to 10%.

10. The positive electrode plate (20) according to any one of claims 1 to 7, **characterized in that**,

the first coating (22) comprises a ceramic material, a conductive agent, and a binder; wherein, based on a total mass of the first coating (22),
a mass percentage of the ceramic material is 70% to 90%;
a mass percentage of the binder is 5% to 20%; and
a mass percentage of the conductive agent is 1% to 10%.

11. The positive electrode plate (20) according to any one of claims 1 to 10, **characterized in that**,

the positive electrode active substance layer (24) comprises a positive electrode active substance; wherein the positive electrode active substance comprises one or more selected from the group consisting of lithium cobalt oxide, lithium iron phosphate, lithium manganese iron phosphate, lithium manganate and lithium nickel cobalt manganate; and
$D_v50$ of the positive electrode active substance is 10 $\mu$m to 20 $\mu$m.

12. A secondary battery (10), comprising the positive electrode plate (20) according to any one of claims 1 to 11.

13. An electric apparatus, comprising the secondary battery (10) according to claim 12.

FIG. 1

FIG. 2

FIG. 3

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

EP 24 15 9087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/050583 A1 (LI XING [CN] ET AL) 18 February 2021 (2021-02-18) * claim 1 * * claim 15 * * claim 16 * * paragraph [0083] * | 1-13 | INV. H01M4/131 H01M4/66 ADD. H01M4/02 H01M4/136 |
| A | EP 3 654 426 A1 (CONTEMPORARY AMPEREX TECHNOLOGY CO LTD [CN]) 20 May 2020 (2020-05-20) * the whole document * | 1-13 | |
| A | EP 3 483 907 A1 (CONTEMPORARY AMPEREX TECHNOLOGY CO LTD [CN]) 15 May 2019 (2019-05-15) * the whole document * | 1-13 | |

| | TECHNICAL FIELDS SEARCHED (IPC) |
|---|---|
| | H01M |

The present search report has been drawn up for all claims

| Place of search | Date of completion of the search | Examiner |
|---|---|---|
| Munich | 26 June 2024 | Koessler, Jean-Luc |

EPO FORM 1503 03.82 (P04C01)

## ANNEX TO THE EUROPEAN SEARCH REPORT
## ON EUROPEAN PATENT APPLICATION NO.

EP 24 15 9087

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | | Publication date | Patent family member(s) | | Publication date |
|---|---|---|---|---|---|
| US 2021050583 | A1 | 18-02-2021 | CN | 111200102 A | 26-05-2020 |
| | | | EP | 3796422 A1 | 24-03-2021 |
| | | | US | 2021050583 A1 | 18-02-2021 |
| | | | WO | 2020098787 A1 | 22-05-2020 |
| EP 3654426 | A1 | 20-05-2020 | CN | 111200111 A | 26-05-2020 |
| | | | EP | 3654426 A1 | 20-05-2020 |
| | | | PL | 3654426 T3 | 05-07-2021 |
| | | | US | 2020161624 A1 | 21-05-2020 |
| | | | US | 2023223666 A1 | 13-07-2023 |
| | | | WO | 2020098765 A1 | 22-05-2020 |
| EP 3483907 | A1 | 15-05-2019 | CN | 109755468 A | 14-05-2019 |
| | | | EP | 3483907 A1 | 15-05-2019 |
| | | | ES | 2821937 T3 | 28-04-2021 |
| | | | US | 2019140280 A1 | 09-05-2019 |

EPO FORM P0459

For more details about this annex : see Official Journal of the European Patent Office, No. 12/82